# EUROPEAN PATENT APPLICATION

(11) **EP 2 801 896 A1**
(43) Date of publication of application: **12.11.2014**
(21) Application number: 14001666.8
(22) Date of filing: 12.05.2014
(51) Int. Cl.: G06F 3/0481, G06F 9/44, G06F 17/24

(54) **System and method for annotating application GUIs**

(30) Priority: 10.05.2013 US 201361822083 P; 21.05.2013 US 201313899174
(71) Applicant: Successfactors, Inc., South San Francisco, CA 94080 (US)
(72) Inventor: Glover, Adam, South SAN Francisco, CA 94080 (US); Zyszkiewicz, Steve, South SAN Francisco, CA 94080 (US)
(74) Representative: Müller-Boré & Partner Patentanwälte PartG mbB

(57) **Abstract**

An annotation utility can be invoked to annotate an application GUI. The annotation utility can present predefined annotation graphics based on a user's graphical annotations. The annotation utility can include textual annotations from the user. The application GUI may be presented on a display device in an application layer and annotations may be made an annotation layer that is separate from the application layer. The annotated application GUI may comprise a composite image of the application GUI overlain by the graphical and textual annotations.

## Description

### CROSS REFERENCE TO RELATED APPLICATION

This application claims priority to U.S. Provisional Application No. 61/822,083, filed May 10, 2013, and is incorporated herein by reference for all purposes.

### BACKGROUND

Unless otherwise indicated herein, the approaches described in this section are not prior art to the claims in this application and are not admitted to be prior art by inclusion in this section.

Annotations are a convenient way of communicating in a specific context. For example, the documents relating to a particular collaborative effort can be annotated (marked up) and shared among colleagues. Increasingly, the sharing of information is occurring on computer systems (e.g., desktop computers, laptop computers, computer tablets, and so on), rather than via hardcopy documents. Software application provide new possibilities for presenting information that cannot be easily reproduced, if at all, on paper. Collaborative efforts therefore include computer-generated and computer-displayed data, and as such, the benefits of the role of annotations still apply in a computer-centric collaborative effort.

### BRIEF DESCRIPTION OF THE DRAWINGS

Fig. 1 is a high level system diagram of a computing device in accordance with the present disclosure.
Fig. 1A shows additional detail of the display device shown in Fig. 1.
Fig. 2 illustrates an example of an application's graphical user interface (GUI).
Fig. 3 illustrates an example of an annotation layer in accordance with the present disclosure.
Fig. 4 shows an application layer in relation to an annotation layer in accordance with the present disclosure.
Figs. 5A, 5B, 5C, and 5D illustrate annotation graphics.
Figs. 6A, 6B, 6C, and 6D illustrate textual graphics.
Fig. 7A shows an example of different delivery methods for delivering an annotated application GUI.
Fig. 7B shows an example an email delivery method.
Fig. 8 illustrates an example of high level processing for annotations in accordance with the present disclosure.
Fig. 8A illustrates an example of a screenshot showing an annotated screen.
Fig. 9 illustrates an example of annotation graphics selection.
Fig. 10 illustrates a collaborative configuration in accordance with the present disclosure.

### DETAILED DESCRIPTION

In the following description, for purposes of explanation, numerous examples and specific details are set forth in order to provide a thorough understanding of the present disclosure. It will be evident, however, to one skilled in the art that the present disclosure as expressed in the claims may include some or all of the features in these examples alone or in combination with other features described below, and may further include modifications and equivalents of the features and concepts described herein.

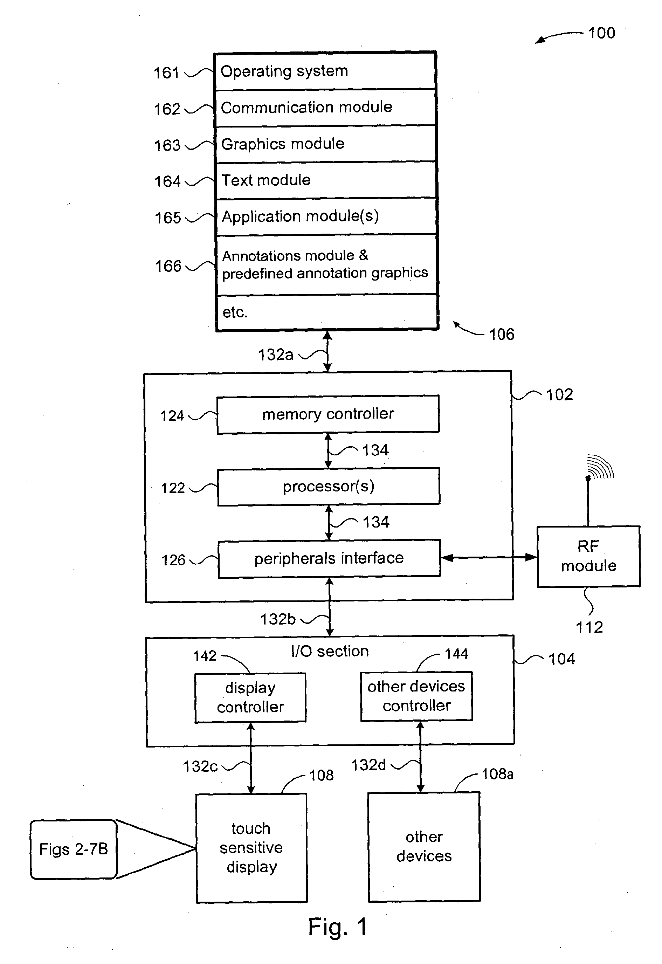

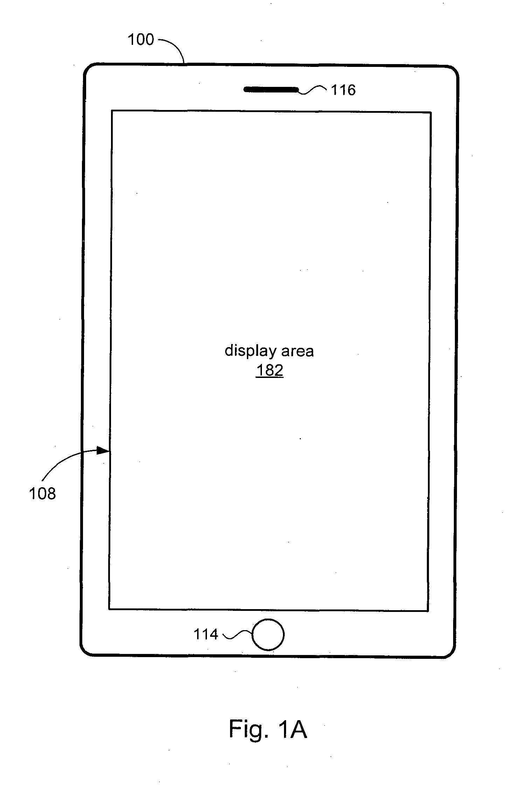

Fig. 1 shows a computing device 100 in accordance with embodiments of the present disclosure. In some embodiments, the computing device 100 may be a computer tablet, a smartphone, or other mobile computing device. The computing device 100 may include a processor section 102, an input/output (I/O) section 104, a memory 106, I/O devices 108, 108a, and a radio frequency (RF) module 112.

The processor section 102 may include a processor 122, which in some embodiments may comprise a multiprocessor architecture. A memory controller 124 may control and provide access to the memory 104 over a bus 132a. A peripherals interface 126 may control and provide access to the I/O section 104 via a bus 132b. A bus architecture 134 may interconnect the components of the processor section 102.

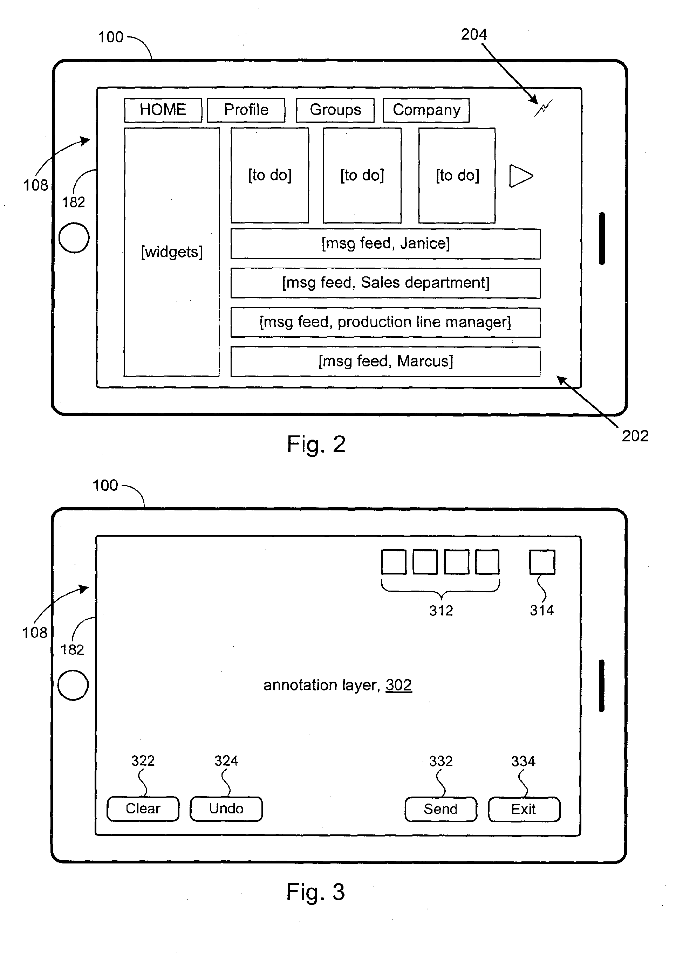

The I/O section 104 may include a display controller 142 to control display device 108. In some embodiments, the display device may be a touch-sensitive device for providing an input interface and an output interface between the computing device 100 and a user. The touch-sensitive device 108 may display or otherwise present visual output to the user in accordance with the present disclosure, including graphics, text, icons, video, combinations thereof, and so on; for example, as will be explained in Figs. 2-7B.

The touch-sensitive device 108 may include a touch-sensitive surface that accepts input from the user based on tactile contact such as finger swipes, taps, and the like.

In some embodiments, the computing device 100 may include devices 108a in addition to the display device 108; e.g., a track pad. Buses 132c and 132d may provide access and control to respective devices 108 and 108a.

The memory 106 may comprise computer-readable storage media including volatile memory (e.g., dynamic random access memory, DRAM) and non-volatile memory (e.g., static RAM such as flash memory). The memory 106 may store various software modules of components which when executed by the processor(s) 122 cause the processors to perform various steps/tasks. The software modules may include an operating system (OS) 161, a communication module 162, a graphics module 163, a text module 164, one or more application modules 165, and so on.

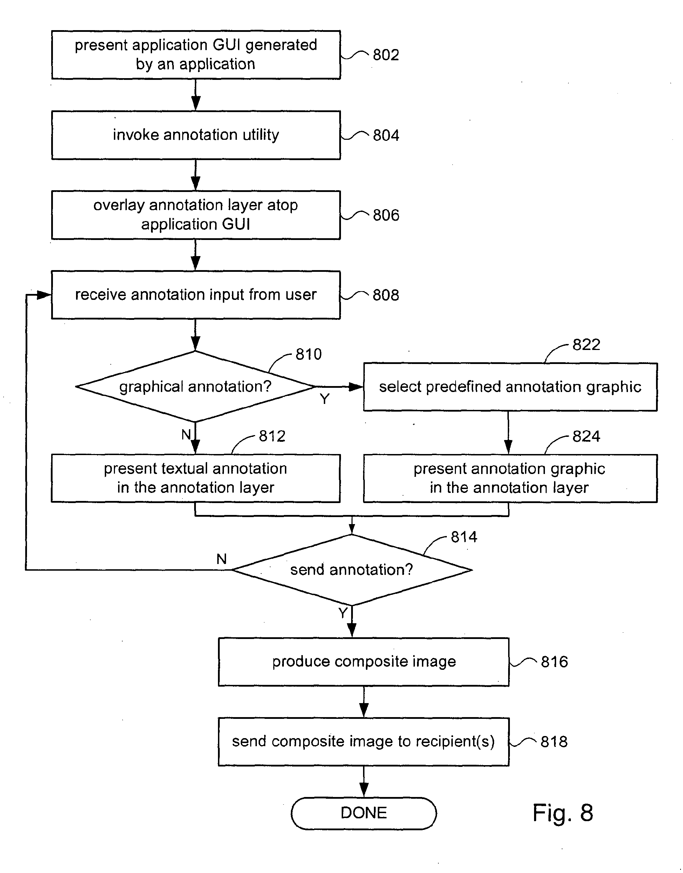

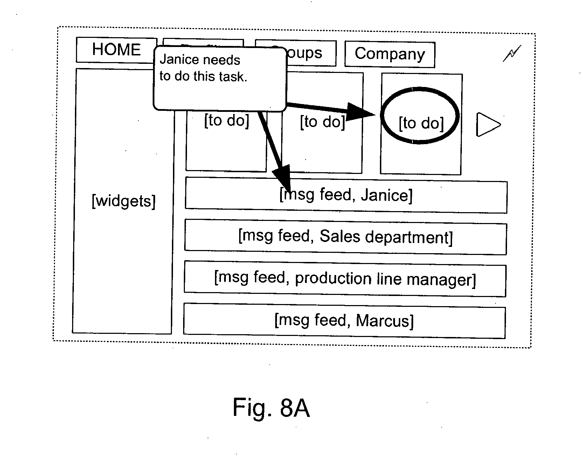

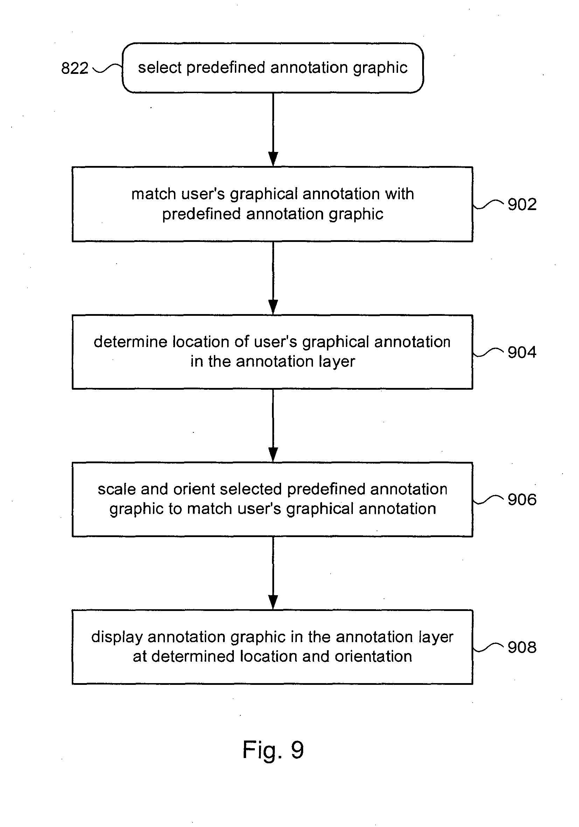

In accordance with principles of the present disclosure, the memory 106 may include an annotations module 166. Although illustrated in the figure as a separate module, in some embodiments, the annotations module 166 may be a constituent software component in an application module 165. For example, the annotations module 166 be a subroutine that is compiled with an application module 165. The annotations module 166 may comprise executable program code which when executed by the processor(s) 122 will cause the processor(s) to perform steps in accordance with the present disclosure; e.g., as set forth in the flow charts in Figs. 8 and 9.

The communication module 162 may include software that allows the computing device 100 to communicate with other devices and/or other users using the RF module 112. In some embodiments, the communication module 162 may provide cellular phone functionality, WiFi^{®} communication (e.g., for Internet access, text messaging, etc.), Bluetooth^{®} communication, and so on.

The graphics module 163 may include software for providing graphics rendering capability. The text module 164 may include software for text processing, including receiving text and displaying text. In some embodiments, the text module 164 may support a virtual keyboard.

The applications modules 165 may include any of several applications that may be provided on the computing device 100 or downloaded onto the computing device. An applications module 165 typically generates a graphical user interface (GUI) that is presented on the display device 108. A GUI may comprise any suitable graphical and textual information that facilitates a user's navigation of an application and access to the application's functionality. For example, the GUI in an email application may present multiple areas of information in the display area 182 containing different kinds of information, including for example, a typical menu bar that can provide dropdown menus for accessing the different functions of the email application. The email GUI may present a list of email folders in one area, a list of emails comprising a selected folder in another area, contents of a selected email in yet another area, and so on.

Fig. 1A illustrates details of a computing device 100 having a touch sensitive display device 108 in accordance with some embodiments. The display device 108 may display visual elements such as graphics, text, images, video, and so on in a display area 182. A user may interact with the visual elements presented in the display device 108 by making contact or otherwise touching the display device, including for example, tapping in the display area 182 with a finger, swiping one or more fingers across the surface of the display area, and so on. More generally, input from the user may be made by detecting touch gestures made in the display area 182.

The computing device 100 may include a physical button, such as a "home" button 114. The home button 114 may be used to navigate the user to a common starting point, such as returning the user to a default screen. A speaker output 116 may be provided for audio output, such as from a video, a video game, teleconferencing with another user, and so on.

Fig. 2 depicts an illustrative example of an application GUI 202 generated by an application (e.g., application module 165) executing on computing device 100. The application GUI 202 may be presented in display area 182 of the display device 108. The example shown in Fig. 2 represents a user interface of an application based loosely on a collaboration tool, and is used solely for illustrative purposes to explain various aspects of the present disclosure. One of ordinary skill will appreciate that the particular visual elements (e.g., menu items, windows, etc.) in any one GUI will depend on the specific application that generates the GUI.

Referring to Fig. 2, the application GUI 202 includes a menu bar comprising a HOME button, a Profile button, a Groups button, and a Company button. The application GUI 202 further includes a widgets area (or window) that may list various utilities such as a calendar utility, a notification utility, messaging, and the like. A todo area provides a to do list to inform the user of action items that need to be completed. The application GUI 202 displays feeds from the user's colleagues to facilitate communications among them.

During operation of the application 165, the user may interact with the application GUI 202 to accomplish work. For example, the user may tap on a todo action item to view the details of the action item, modify the details, mark the item as completed, and so on. The user may tap on a widget listed in the widgets area to call up a utility; e.g., a calendar utility to schedule a meeting, and so on.

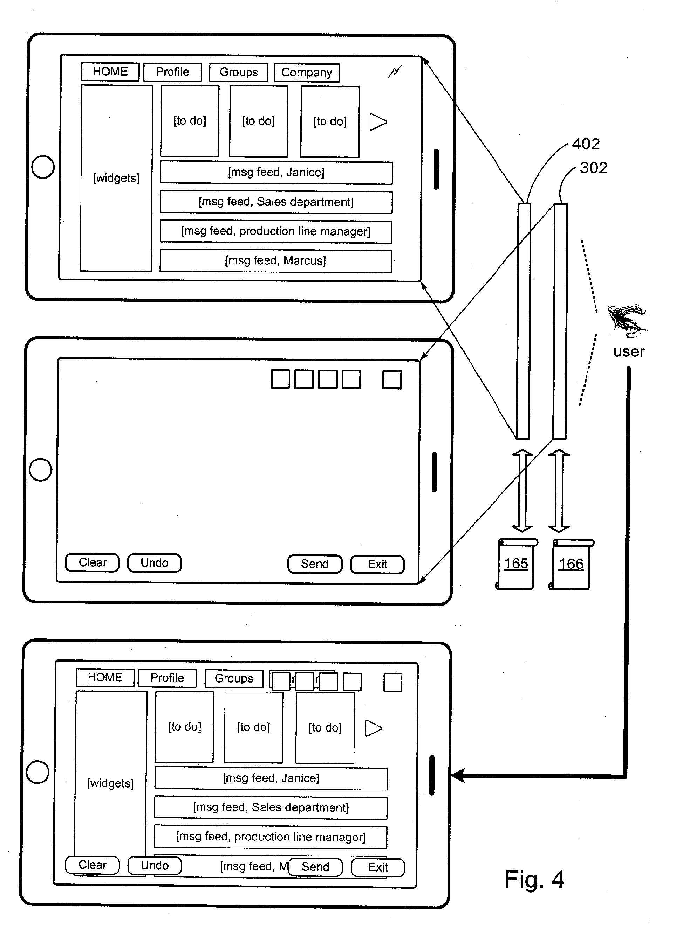

In accordance with principles of the present disclosure, the user may call up or otherwise invoke a GUI annotation utility (e.g., annotations module 166). In some embodiments, for example, a graphic 204 may be displayed in the application GUI 202 to invoke the annotation utility 166, for example, when the user taps on the graphic or clicks the graphic with a cursor. In some embodiments, the annotation utility 166 may display an annotation layer atop the application GUI 202, for example, as illustrated in Fig. 4. As will be explained in more detail below, the annotation utility 166 provides a tool for the user to make annotations on the application GUI 202. The annotation utility 166 allows the user to annotate any part of the application GUI 202 that is presented in the display area 182 at the time the annotation utility was invoked.

Referring now to Fig. 3, details of an annotation layer 302 in accordance with the present disclosure will be described. The annotation layer 302 is shown isolated from the application GUI 202 to simplify the discussion. However, it will be understood that in typical embodiments, an image of the annotation layer 302 overlays an image of the application GUI 202 that is being annotated.

The annotation layer 302 may include a color palette 312 that allows the user to select a color with which to make their annotations. A text button 314 allows the user to make textual annotations. A Clear button 322 may be provided to allow the user to clear out (erase) all of their annotations, both graphical and textual. An Undo button 324 may be provided to allow the user to clear or erase the last graphical or textual annotation made by the user. A Send button 332 allows the user to send the annotated GUI to one or more recipients. An Exit button 334 allow the user to exit the annotation utility 166, and return to the application.

Referring to Fig. 4, the annotation layer 302 may be viewed as a logical construct that provides a framework for how the annotation utility 166 presents output to the user and receives input from the user. In some embodiments, the annotation layer 302 may be associated with a section of memory (e.g., graphics memory) that is mapped to pixel locations of the display area 182. When the annotation utility 166 generates output (e.g., graphical elements), the output may be written to that section of memory associated with the annotation layer 302, which is then presented in the display area 182. Likewise, the application GUI 202 may be presented in an application layer 402 that is associated with another section of memory and is also mapped to pixel locations of the display area 182. When the application 165 outputs information, the information may be written to that section of memory associated with the application layer 402, which is then presented in the display area 182.

The application layer 402 may be "active". When the application layer 402 is active, user input made by a user (e.g., gestures made on the display device 108, mouse actions, etc.) is routed by the OS to the application 165, and processed by the application. For example, if the user makes a swiping gesture, that input will be sent to the application 165, which may respond, for example, by repositioning the image presented in the application layer 402. In addition, when the application layer 402 is active, the display area 182 presents the contents of the section of memory associated with the application layer, namely the application GUI 202.

Likewise, the annotation layer 302 may be active. In accordance with the present disclosure, when the annotation layer 302 is active, the annotation layer may be presented in the display area 182 concurrently with and atop the application layer 402. The annotation layer 302 may be presented as an opaque or semi-transparent layer that is displayed over the application layer 402, allowing portions of the application layer to be visible. As illustrated in Fig. 4, this arrangement may visually manifest itself to a user in the form of some of the visual elements in the application layer 402 being occluded by some of visual elements in the annotation layer 302. The display area 182 in Fig. 4 shows the result of this effect, in which visual elements of the application GUI 202 in the application layer 402 are partially blocked by overlying visual elements in the annotation layer 302.

Further in accordance with the present disclosure, when the annotation layer 302 is active, the application layer 402 is "inactive". User input from the user is routed by the OS to the annotation utility 166 rather than to the application 165, and can be processed by the annotation utility and is not processed by the application. For example, a swiping gesture input will be routed to the annotation utility 166 and processed by the annotation utility. The input will not be routed to the application 165, and so will not change or activate any of the graphical user interface elements in the application layer 402.

Moreover, in accordance with principles of the present disclosure, although the application layer 402 is inactive, the application 165 itself may continue to execute; e.g., as a background process. Any output made by the application 165 will continue to be presented in the application layer 402 and appear in the display area 182 overlain by the annotation layer 302. In some embodiments, for example, the layout of the graphical user interface of the application displayed in the application layer 402 is being updated or rearranged while the active annotation layer 302 is displayed over the application layer 402. For example, an application graphical user interface such as the one shown in Fig. 2 may have a plurality of tiles with each tile displaying different types of information such as profile information, message feeds, to do information, group information, company information and widget information. In this example, one or more of the tiles may change its size or location without user initiated action while the annotation layer 302 is displayed over the application layer 402. In some embodiments, content displayed by the graphical user interface of the application corresponding to the application layer 402 is updated or changed. For example, a message feed displayed in the application may retrieve or receive new messages or additional information from a server system remote from the computing device 100 and display the new messages or additional information in the feed. In this way, any updates made to the application GUI 402 by the application 165 will be seen by the user while they make their annotations.

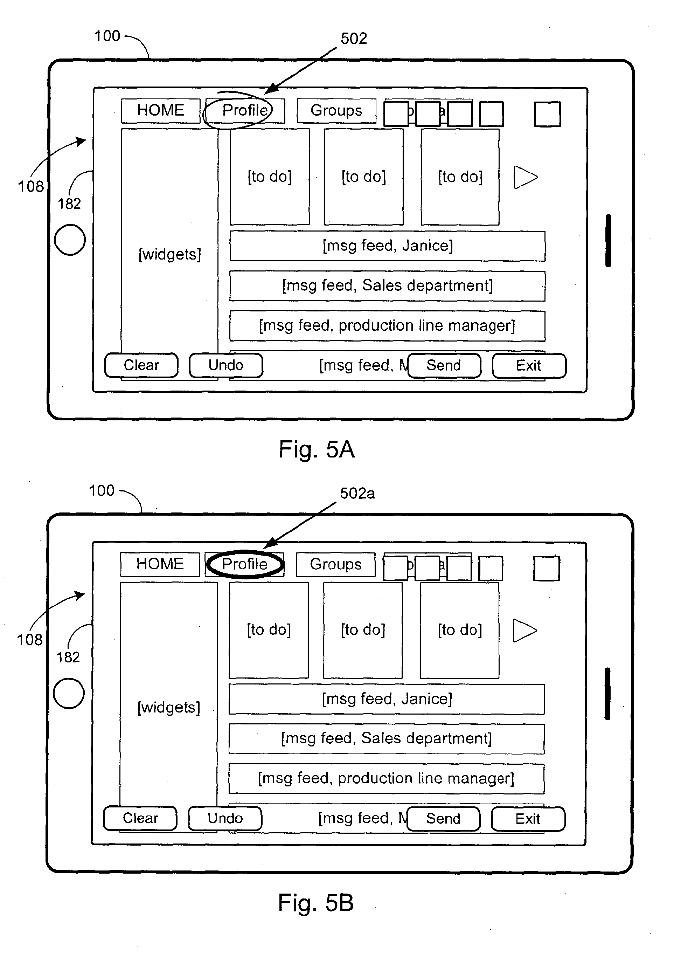

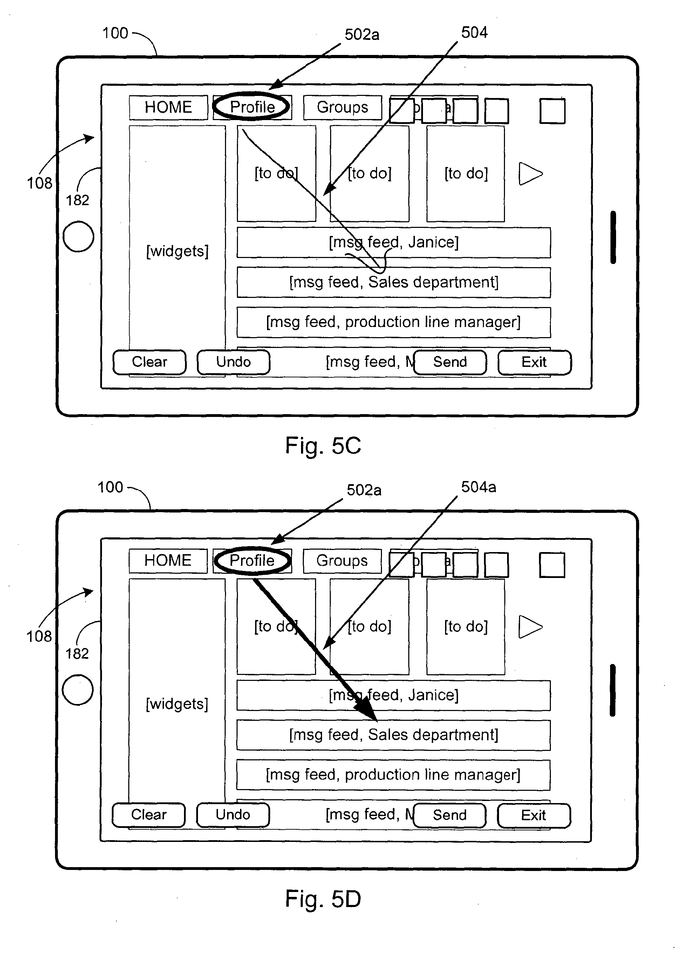

Referring now to Figs. 5A, 5B, 5C, and 5D, the making of annotations in accordance with the present disclosure will now be discussed. As can be seen in Fig. 5A, the user may make a graphical annotation 502 in the annotation layer 302; for example, by tracing out shapes with their finger on the display device 108. When the user completes a gesture, the resulting graphical annotation made by the user may be replaced by a predefined annotation graphic. Thus, for example, suppose the user traces out the shape 502 with their finger. An image of the tracing, namely shape 502, may be presented in the annotation layer 302 (and hence displayed in the display area 182). When the user completes the tracing gesture (e.g., by lifting their finger off the surface of the display device 108), the annotation utility 166 may identify a predefined annotation graphic, from among a collection of annotation graphics, that matches the user's input. For example, the annotation graphic 502a in Fig. 5B may be identified as a replacement for the user's shape 502. The user's shape 502 may be removed from the annotation layer 302, and the annotation graphic 502a may be presented in the annotation layer in its place, as indicated in Fig. 5B.

Referring to Fig. 5C, if the user then makes another graphical annotation 504, the annotation utility 166 may again find a matching predefined annotation graphic (e.g., 504a, Fig. 5D) from the collection of predefined annotation graphics and present it in the annotation layer 302 in place of the user's input. In some embodiments, the collection of predefined annotation graphics may include a circle, an ellipse, a rectangular box, a square box, a straight line, an arrow, and so on.

In accordance with the present disclosure, the annotation layer 302 covers the entire display area 182 of the display device 108. The annotation utility 166 may be configured to allow user input to be made anywhere in the display area 182. Since, the application layer 402 also covers the entire display area 182, the user can effectively annotate any part of the application GUI 202 that is presented in the application layer 402 by virtue of being able to make annotations in any part of the annotation layer 302. Fig. 5A, for example, illustrates this point where the user has made a graphical annotation 502 in the annotation layer 302 in an area that corresponds to the menu area around the Profile menu button in the application layer 402. Since the annotation layer 302 is displayed over the application layer 402, it appears to the user as if they are marking up the application GUI 202 that is displayed in the application layer. The provisioning and arrangement of the annotation layer 302 in accordance with the present disclosure is advantageous because the user is able to view the application GUI 202 and updates made to the application GUI as the application 165 continues to run, while at the same time being able to annotate the application GUI without disturbing the state of the running application; i.e., the user's input does not activate any of the application's GUI elements.

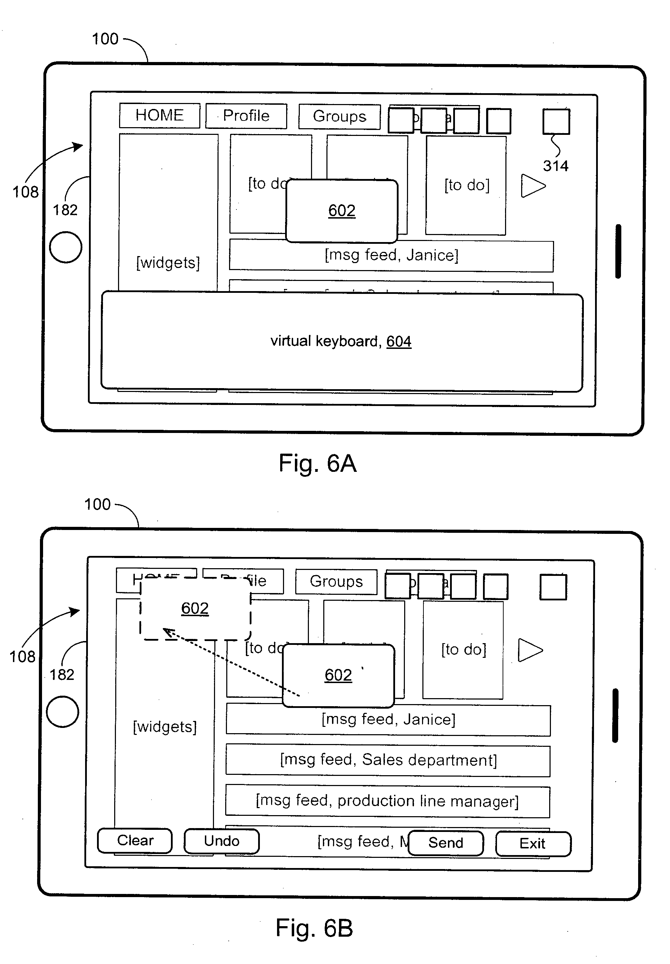

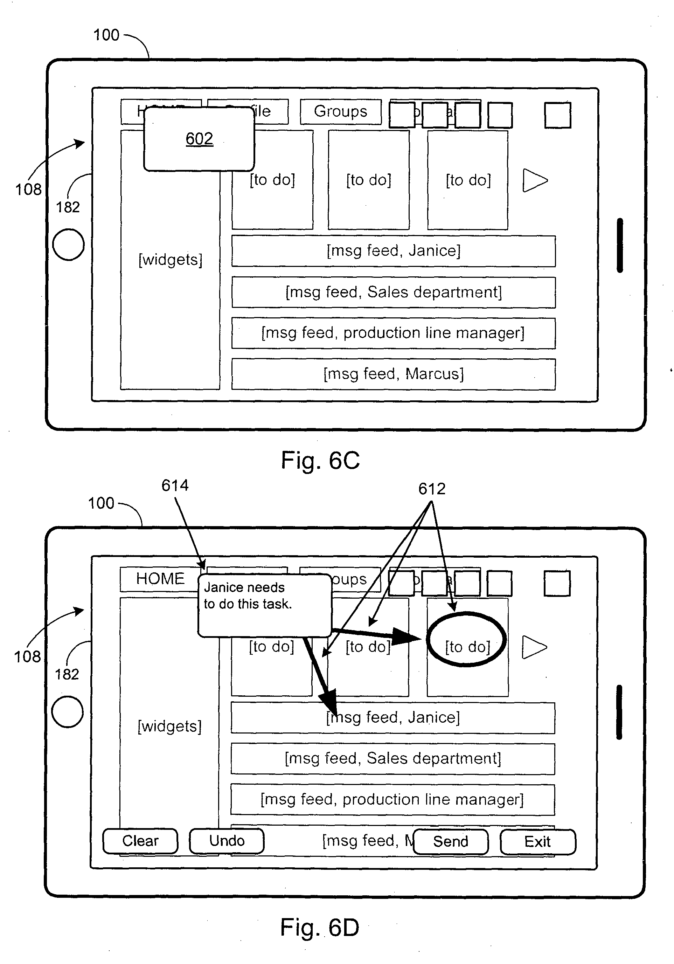

Referring now to Fig. 3 and Figs. 6A, 6B, 6C, and 6D, in accordance with the present disclosure, the user may make textual annotations in addition to graphical annotations. For example, when the user taps or otherwise selects the text button 314, the annotation utility may present a text box 602 (Fig. 6A) at a default location in the annotation layer 302 into which the user may enter their textual annotation. The user may enter text using a virtual keyboard 604 that is presented in the annotation layer 302.

The user may re-position the text box 602. For example, the user may tap the text box 602 with their finger and make a swiping motion to move the text box to a new location, as illustrated in the sequence of Figs. 6B and 6C.

Fig. 6D illustrates an example of an annotated application GUI that has both graphical annotations 612 and textual annotations 614.

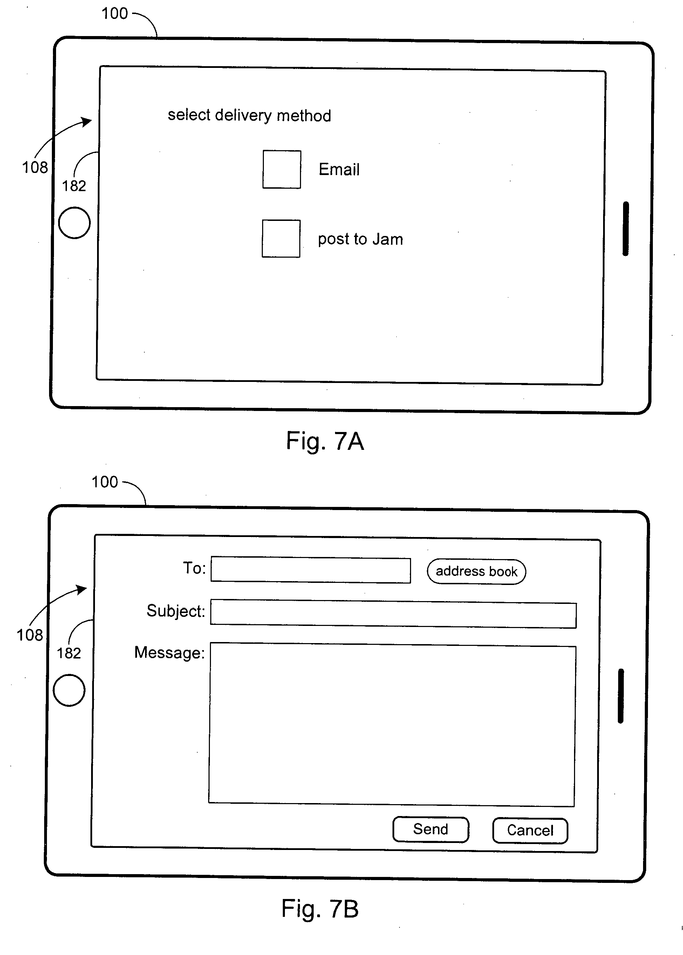

Referring to Fig. 3 and Figs. 7A and 7B, the user may send the annotated application GUI 202 to a recipient by tapping or otherwise selecting the Send button 332. The annotation utility 166 may present a screen 802 in the annotation layer 302 that offers a selection of delivery methods to the user. In some embodiments, as illustrated in Fig. 7A for example, the annotated application GUI 202 may be delivered to recipients in an email or posted to a social network or collaboration system. It will be appreciated, however, that in other embodiments, additional/alternative delivery methods may be used, for example, texting the annotated application GUI 202 in a text message (e.g., using multimedia messaging system, MMS).

Fig. 7B shows an example for inputting the details for an email message. For example, the user may specify several recipients for receiving the annotated application GUI in the TO field. An address book may be accessed to facilitate the identification and selection of recipient(s). The annotation utility 166 may present similar input screens depending on the delivery method that the user selects.

Annotation processing in accordance with the present disclosure will now be described in connection with Fig. 8. In accordance with some embodiments of the present disclosure, a processor (e.g., 122) in a computing device (e.g., 100) may execute program instructions to cause the processor to perform process blocks set forth in Fig. 8. Thus, at block 802, the processor 122 may execute an application (e.g., 165), including presenting an application GUI (e.g., 202) in the display area (e.g., 182) of a display device (e.g., 108). At block 804, the user may invoke an annotation utility (e.g., 166). At block 806, the processor 122 may present an annotation layer (e.g., 302) atop the application GUI 202, as discussed above.

At block 808, the processor 122 may receive annotation input in the annotation layer 302 from the user. The input may be graphical annotations made by the user or textual annotations, as discussed above.

If at block 810, the user inputs a graphical annotation (e.g., 502), then in block 822, the processor 122 may select a predefined annotation graphic (e.g., 502a) from a collection of predefined annotation graphics and, in block 824, present the selected predefined annotation graphic in the annotation layer. If at block 810, the user specifies textual annotations (e.g., via Text button 314), then in block 812, the processor 122 may present a text input box (e.g., 602) as discussed above to input text annotations.

If at block 814, the user specifies sending the annotated application GUI, then processing proceeds to block 816. Otherwise, processing returns to block 808 to receive additional annotation input from the user.

At block 816, the processor 122 may generate a composite image comprising an image of the application GUI 202 overlain with an image of annotation graphics (e.g., 612) and textual annotations (e.g., 614) made by the user. Consider the example shown in Fig. 6D, where the application GUI 202 has been annotated. The composite image may appear as shown in Fig. 8A. In some embodiments, the composite image shown in Fig. 8A may be obtained by taking a screenshot of the display area 182, after turning off the displays of the utility buttons (Fig. 3) of the annotation layer 302.

At block 818, the processor 122 may then send the composite image, which constitutes the annotated application GUI, to one or more recipients specified by the user using a specified delivery method. For example, the user may send the annotated application GUI to a colleague for discussion.

When block 822 is performed to select a predefined annotation graphic (e.g., 504a) based on a graphical annotation (e.g., 504) made by the user, the processor 122 may execute program instructions to cause the processor to perform process blocks set forth in Fig. 9. At block 902, the basic shape of the user's graphical annotation 504 may be compared to the various shapes in the collection of predefined annotation graphics. At block 904, the location of the user's graphical annotation 504 in the annotation layer 302 may be determined. For example, XY coordinates of the upper right comer of the graphical annotation 504 may be used to define the location.

At block 906, the selected predefined annotation graphic 504a may be scaled and rotated to match the user's graphical annotation 504. The scaling will match the size of the user's graphical annotation 504 to the size of the selected predefined annotation graphic 504a. The rotation will orient the selected predefined annotation graphic 504a to match the orientation of the user's graphical annotation 504.

At block 908, the sized and oriented predefined annotation graphic 504a may be presented in the display area 182 using the location information determined in block 904. In some embodiments, the annotation graphic 504a may replace the user's graphical annotation 504. In some embodiments, the predefined annotation graphic 504a may be presented in a default color. If the user had selected a color (e.g., using color palette 312), then the predefined annotation graphic 504a may be presented in the color selected by the user.

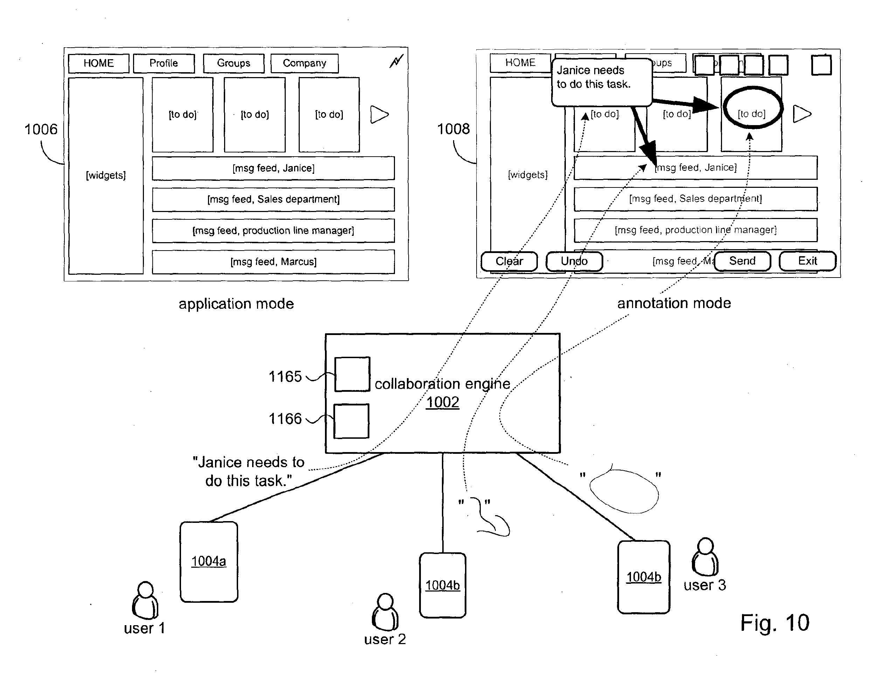

Referring now to Fig. 10, a system for collaborative annotations in accordance with the present disclosure will now be discussed. A collaboration engine 1002 may provide a framework for executing a collaborative application 1165. Various users (user 1, user 2, user 3) may communicate with the collaboration engine 1002 to interact with the collaborative application 1165 via their computers (e.g., computing tablets 1004a, 1004b, 1004c). The collaboration engine 1002 may communicate with computing tablets 1004a, 1004b, 1004c wirelessly over a communication network (e.g., Internet).

When users are interacting with the collaborative application 1165, the collaboration engine 1002 may update the computing tablets 1004a, 1004b, 1004c with images that constitute the GUI for the collaborative application. The collaboration engine 1002 is said to operate in an "application mode" where the display on each computing tablet 1004a, 1004b, 1004c presents an application mode GUI 1006 comprising the application layer (e.g., 202) of the collaborative application 1165. When users make gestures on their computing tablets 1004a, 1004b, 1004c, the input is sent to the collaboration engine 1002 and intercepted by the collaborative application 1165. The collaboration engine 1002 may update the application mode GUI 1006 as changes are made by the users during a collaborative effort. The collaboration engine 1002 may then propagate those changes to each computing tablet 1004a, 1004b, 1004c, thus updating each user's display.

The collaboration engine 1002 may include an annotation module 1166. Any user may invoke the annotation module 1166 to make annotations on the GUI. In "annotation mode", the collaboration engine 1002 causes each computing tablet 1004a, 1004b, 1004c to display an annotation mode GUI 1008 comprising an annotation layer (e.g., 302) overlain atop the application layer (e.g., 202) of the collaborative application 1165. In annotation mode, users' inputs are intercepted by the annotation module 1166 rather than the collaborative application 1165, and translated to annotation markings in the annotation layer of the annotation mode GUI 1008.

Fig. 10 shows, for example, that user 2 made a graphical annotation (an "arrow") on their computing tablet 1004b. That gesture is intercepted by the annotation module 1166 and translated to a corresponding annotation graphic in the annotation mode GUI 1008. Likewise, user 1 has made a textual annotation, which is presented in the annotation mode GUI 1008. And similarly for user 3. The collaboration engine 1002 therefore provides a framework that allows collaborating users to annotate their work in a common environment created by the collaborative application 1165 using the annotation module 1166.

### Advantages and Technical Effect

Annotations in accordance with present embodiment can enhance collaboration among colleagues by facilitating the exchange of information that is presented in the GUI of an application. For example, the GUI of an enterprise application may present various charts, tables, and other data that a user may want to discuss colleagues. Users who want to share their thoughts on such analytics can invoke the annotation utility and start making annotations and other marks directly on the GUI, and send the annotated GUI to their colleagues.

Annotations in accordance with present embodiment can be used in an environment when an application is being developed. During development of an application, the application GUI may be in flux, and users may notice problems with the GUI or have suggestions on how to improve the GUI. Directly annotating the application's GUI provides a very intuitive approach for exchanging ideas about the GUI during the design stages. As a support tool, annotating an application GUI can be indispensible. If some error occurs in an application, the user can simply invoke the annotation utility and identify the error using graphics and text.

The above description illustrates various embodiments of the present disclosure along with examples of how aspects of the particular embodiments may be implemented. The above examples should not be deemed to be the only embodiments, and are presented to illustrate the flexibility and advantages of the particular embodiments as defined by the following claims. Based on the above disclosure and the following claims, other arrangements, embodiments, implementations and equivalents may be employed without departing from the scope of the present disclosure as defined by the claims.

## Claims

1. A computer-implemented method for annotations, the method comprising:
presenting in a display area of a computing device an application user interface;
presenting in the display area an annotation layer over the application user interface;
detecting user interaction with the annotation layer;
determining a predefined annotation graphic from among a plurality of predefined annotation graphics based on the user interaction with the annotation layer;
displaying the determined predefined annotation graphic on the annotation layer;
generating a composite image of the annotation layer overlain with the application user interface; and
sending the composite image to at least one recipient.

2. The computer-implemented method of claim 1 further comprising presenting an additional predetermined annotation graphic on the annotation layer when another user makes annotations on another computing device.

3. The computer-implemented method of claim 1 or 2 further comprising displaying a first set of application content on the application user interface;
receiving a second set of application content; and
updating the application user interface with the second set of content application while the annotation layer is displayed over the application user interface.

4. The computer-implemented method of any one of claims 1 to 3 further comprising updating an appearance of the application user interface while the annotation layer is displayed over the application user interface,
wherein potions of the annotation layer may be opaque and wherein application content of the application user interface may be visible through portions of the annotation layer that are not opaque.

5. The computer-implemented method of any one of claims 1 to 4 wherein sending the composite image includes receiving from the user information identifying at least one recipient; and/or
wherein sending the composite image includes receiving from the user information indicative of a sending method with which to send the composite image.

6. The computer-implemented method of any one of claims 1 to 5 further comprising receiving textual annotations from the user and displaying the textual annotations in the annotation layer, wherein the composite image further comprises an image of the application user interface overlain with an image of the textual annotations,
wherein the annotation layer may comprise a color palette, wherein the predefined annotation graphic may be presented with a color selected from the color palette by the user.

7. The computer-implemented method of any one of claims 1 to 6 wherein the user interface comprises:
detecting user contact with the display area;
detecting movement of the user contact; and
displaying a line corresponding to the movement of the user contact;
wherein determining the predefined annotation graphic comprises matching the movement of the user contact to a predefined annotation graphic of the plurality of predefined annotation graphics; and
wherein displaying the determined predefined annotation graphic comprises removing the displayed line corresponding to the movement of the user contact and displaying the predefined annotation graphic at a location where the line was displayed.

8. The computer-implemented method of any one of claims 1 to 7 wherein the composite image comprises an image of the predefined annotation graphic over an image of the application user interface.

9. A computing device comprising:
a data processing unit;
memory having stored therein one or more programs and
a display device,
wherein the one or more programs, which when executed by the data processing unit, causes the data processing unit to:
present in a display area of the display device an application user interface;
present in the display area an annotation layer that overlays an image of the application user interface;
receive at least one graphical annotation made by a user;
present a predefined annotation graphic from among a plurality of predefined annotation graphics based on the graphical annotation made by the user, including overlaying an image of the predefined annotation graphic atop a portion of the image of the application user interface; and
send to at least one recipient other than the user a composite image comprising the image of the application user interface overlain with the image of the predefined annotation graphic.

10. The computing device of claim 9 wherein the one or more programs, which when executed by the data processing unit, further causes the data processing unit to receive a graphical annotation made by another user, wherein the composite image further includes a predefined annotation graphic corresponding to the graphical annotation made by said other user.

11. The computing device of claim 9 or 10 wherein the application user interface is presented in an application layer separate from the annotation layer; and/or
wherein execution of the one or more programs does not restrict where in the display area the user makes the graphical annotation.

12. The computing device of any one of claims 9 to 11 wherein the one or more programs, which when executed by the data processing unit, further causes the data processing unit to receive textual annotations from the user and display the textual annotations in the annotation layer, wherein the composite image further comprises the image of the application user interface overlain with an image of the textual annotations.

13. The computing device of any one of claims 9 to 12 wherein the display device is a touch sensitive display device.

14. A non-transitory computer readable medium having stored thereon one or more programs configured to be executed by a computing device having a display device, the one or more programs comprising instructions for:
presenting in a display area of the display device an application user interface;
presenting in the display area an annotation layer that overlays an image of the application user interface;
receiving at least one graphical annotation made by a user;
presenting a predefined annotation graphic from among a plurality of predefined annotation graphics based on the graphical annotation made by the user, including overlaying an image of the predefined annotation graphic atop a portion of the image of the application user interface; and
sending to at least one recipient other than the user a composite image comprising the image of the application user interface overlain with the image of the predefined annotation graphic.

15. The non-transitory computer readable medium of claim 14 wherein the application user interface is presented in an application layer separate from the annotation layer; and/or
wherein execution of the one or programs does not restrict where in the display area the user makes the graphical annotation.
